# EUROPEAN PATENT SPECIFICATION

(11) **EP 4 459 147 B1**
(45) Date of publication and mention of the grant of the patent: **28.10.2026**
(21) Application number: 23171565.7
(22) Date of filing: 04.05.2023
(51) Int. Cl.: F16C 33/58, F16C 33/64

(54) **A BEARING RING, A BEARING, A WIND TURBINE AND METHOD OF MANUFACTURING A BEARING RING**
LAGERRING, LAGER, WINDTURBINE UND VERFAHREN ZUR HERSTELLUNG EINES LAGERRINGS
BAGUE DE PALIER, PALIER, ÉOLIENNE ET PROCÉDÉ DE FABRICATION D'UNE BAGUE DE PALIER

(43) Date of publication of application: 06.11.2024
(73) Proprietor: VESTAS WIND SYSTEMS A/S, 8200 Aarhus N (DK)
(72) Inventor: Schwack, Fabian, Aarhus C (DK); Teidelt, Anna Elena, Tilst (DK)
(74) Representative: Vestas Patents Department

(56) References cited:
- EP-B1- 1 977 126
- DE-A1- 102020 205 669
- US-A1- 2015 368 735

## Description

### BACKGROUND OF THE INVENTION

The invention relates to a bearing ring, a bearing, a wind turbine and methods of manufacturing a bearing ring.

### DESCRIPTION OF THE RELATED ART

Bearings are used in a wide variety of technical fields in order to support, guide, and reduce the friction of motion between different parts such as between fixed and moving parts. The bearings may face very high loads in some technical fields such as in the wind turbine area.

Hardening of the raceway is applied to most rolling element bearings. The raceways of bearings are hardened to improve the resistance to wear and fatigue, which resolves in an overall improvement in reliability. The conventional methods for hardening involve case hardening, induction hardening, nitriding, carburizing, case hardening and cryogenic hardening. For larger bearings, as wind turbine bearings, case and induction hardening is frequently used. During case hardening the surface of the bearing is heated and then quenched to create a hard outer layer, while leaving the core of the bearing relatively soft and ductile. Induction hardening uses a high-frequency electrical current to heat the surface of the bearing. This process allows selective hardening of specific parts of the raceway in a uniform and precise manner. Because the hardening tool hardens a specific section/fraction of the raceway at a time, the manufacturer starts at an arbitrary or well-defined location on the bearing rings and then continue round the circumference until the hardening tool is back to the starting position by which a uniform hardening of the full circumference has been carried out.

EP1977126 describes that overlapping of the starting and finishing positions in the hardening process is not allowed in order to avoid annealing of the already hardened raceway to avoid unpredictable material characteristics. As a consequence hereof a small portion of the raceway is less hardened i.e. "soft spots" in the hardened raceway.

A bearing ring with the features of the preamble of claim 1 is disclosed in US 2015/368735 A1.

It is an object of the present invention to establish an improved hardening process for bearing rings.

### THE INVENTION

The hardening depth is usually sought to be consistent over the entire circumference of the raceway of bearing rings. However, according to the present invention, in particular for large slewing bearings with defined load distribution, it may be advantageous to adapt the machine parameters to adapt the hardening depth over the circumference.

As less hardening depth is needed in specific sections of the ring, the hardening process can be optimized. Therefore, the processing speed can be increased, and the costs may be reduced. In addition, failures can be avoided, which can be caused by deep hardening.

The invention therefore provides for a bearing ring comprising at least one raceway, wherein said at least one raceway has been hardened in a hardening process resulting in a hardening depth profile, wherein said hardening depth profile is defined between a maximum hardening depth and a minimum hardening depth, and wherein the hardening depth profile has the value of maximum hardening depth in less than 180° of the circumference of the bearing ring, preferably less than 90°.

The hardness depth of the bearing secures that the needed material requirements meet subsurface stresses from extreme and fatigue loads. Therefore, the hardness depth is dependent on the loads. Typically, in prior art, the final hardening depth is defined by the most critical load cases. Afterwards, the calculated hardness depth is applied to the full raceway.

However, the typical load cases for large slewing bearings with defined load distribution is significantly impacted by the bending moments. Therefore, according to the present invention, it has been realized that cost and process time can be reduced by varying the hardness depth over the circumference of the raceway by adapting the machining process. Therefore, lower loaded sections of the bearing would have less hardening depth.

In particular, the bearings of a wind turbine generally work in heavy load conditions where they may experience axial and radial forces as well as large bending/tilt moments.

Especially, blade bearings work under heavy load conditions because of the presence of axial and radial forces as well as large bending/tilt moments while performing limited oscillating movements instead of a continuous rotating motion.

As mentioned above, said hardening depth profile is defined between a maximum hardening depth and a minimum hardening depth, and wherein the hardening depth profile has the value of maximum hardening depth in less than 180° of the circumference of the bearing ring, preferably less than 90°. Ideally, the hardening depth profile provides a hardening depth along the full circumference of the bearing ring, fitting substantially which level of hardening is needed. Consequently, the maximum hardening depth may in preferred embodiments only be present in less than 45°, or even less than 20° of the full circumference.

In an embodiment of the invention, said hardening process is an induction hardening process.

In an embodiment of the invention, said hardening depth profile is defined by a function including at least one trigonometric function.

In an embodiment of the invention, said hardening depth profile is defined by a combination of multiple periodic functions.

In an embodiment of the invention, said hardening depth profile is at least partly designed based on an expected load distribution along the 360° circumference of the bearing ring.

Further, the invention relates to a bearing comprising at least two bearing rings with at least one raceway, wherein at least one of the bearing rings comprises a bearing ring as described here above, and at least one row of bearing rolling elements positioned between said bearing rings and in contact with each of said at least one raceway.

In embodiments of the invention, said bearing rolling elements are bearing balls or rollers or combinations hereof.

Further, the invention relates to a wind turbine comprising one or more bearings as described here above.

In an embodiment of the invention, said one or more bearings are one or more blade bearings.

Further, the invention provides for a method of manufacturing a bearing ring as described here above, comprising at least one raceway, said method comprising the step of hardening said at least one raceway in a hardening process including a hardening tool resulting in a hardening depth profile, wherein said hardening process includes varying a process parameter of the hardening tool during the hardening process.

In an embodiment of the invention, said process parameter is at least one selected from the group consisting of frequency, power, temperature and speed.

### FIGURES

The invention will be described in the following with reference to the figures in which
- fig. 1: illustrates a wind turbine,
- fig. 2: illustrates an example of a blade bearing for a wind turbine,
- fig. 3: illustrates a 3RRB indicating contact zones,
- fig. 4a and 4b: illustrates a hardening process,
- figs. 5-7: illustrate examples of variable hardening depth.

### DETAILED DESCRIPTION

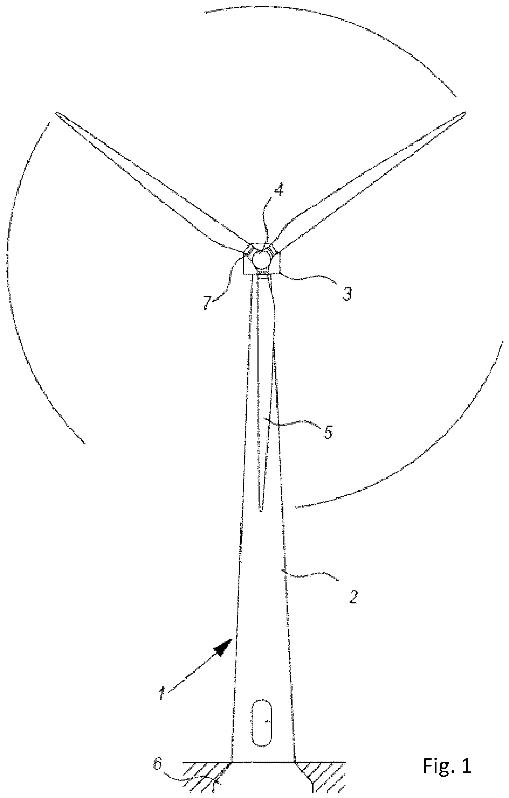

Fig. 1 illustrates a wind turbine 1 mounted on a foundation 6. The wind turbine comprises a tower 2, including a number of tower sections, and a wind turbine nacelle 3 positioned on top of the tower 2. The yaw mechanism with a yaw bearing and motors allows the nacelle to turn in relation to the tower in such a way that the wind turbine rotor may face the wind.

The wind turbine rotor, comprising at least one blade and illustrated in the figure with three wind turbine blades 5, is connected to the hub 4 through pitch mechanisms. Each pitch mechanism includes a blade bearing 7 which allows the blade to pitch in relation to the wind. The hub is connected to the nacelle through a main shaft in the nacelle front. The main shaft is directly connected to a generator or indirectly through a gear mechanism and low speed/high speed shafts wherein the connections may comprise one or more shaft bearings such as rotor and generator bearings.

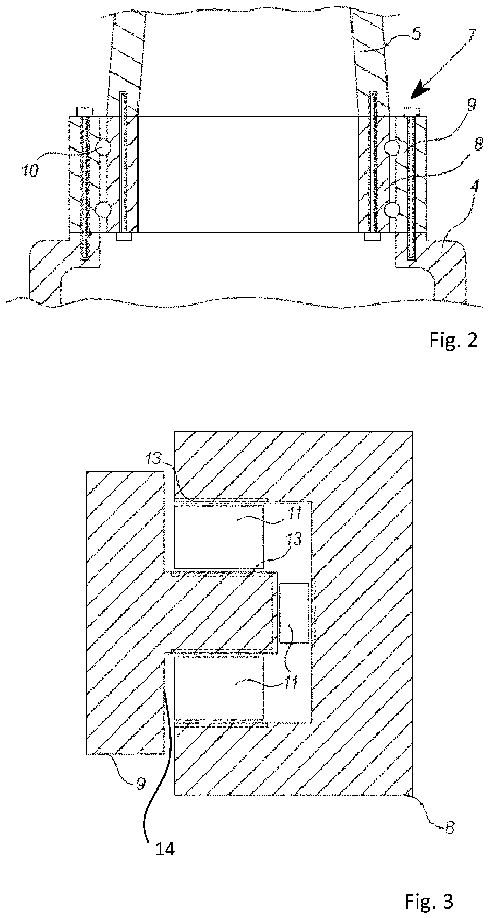

Fig. 2 illustrates an example of a blade bearing 7 for a wind turbine. The wind turbine blade 5 is connected to the inner ring 8 of the blade bearing 7 with a number of bolts. The outer ring 9 of the blade bearing is also connected with a number of bolts to the hub 4. Between the raceways of the bearing rings 8, 9 are positioned two rows of bearing balls 10 allowing the wind turbine blade 5 to pitch in relation to the hub 4.

The wind turbine blade may also be connected to the outer ring and the hub to the inner ring in other embodiments.

Other types of bearings will be known to the skilled person within the technical area of bearings such as 4 point contact ball bearing, thrust bearings (e.g. spherical roller thrust bearings, thrust ball bearings, angular contact thrust ball bearings and cylindrical roller thrust bearings), slewing bearings e.g. three row roller bearings (3RRB) or two row roller + one row ball bearings (2RRB + 1RBB), or even self-aligning ball bearings, deep groove ball bearings or angular contact ball bearings.

The rollers may for example be cylindrical, needle, tapered, barrel or spherical shaped.

Further, the bearings may comprise just one row of bearing balls/rollers or more than two rows of bearing balls/rollers such as three rows. Further, the rows may be positioned on top of or next to each other.

Even though the patent claims herein refer to bearing rings with at least one raceway, it should be clear that the adjusted hardening process as described herein could be used for multiple raceways in a bearing or bearing ring, either with identical hardening depth profiles, or for different rows of rolling elements, different hardening depth profiles may be advantageously used.

Fig. 3 illustrates contact zones 13 in a slewing bearing according to the invention. The contact zones 13 correspond to the raceway of a bearing ring where the rolling elements (illustrated by bearing rollers 11) primarily are in contact with the bearing rings 8, 9 and can transfer load force. The contact of the bearing rolling element on the bearing rings may change with the size of load force.

The bearing is illustrated as a triple row roller bearing (3RRB) but may also include two rows of rollers (upper and lower row; carrying bending/tilt moments as well as axial load force) and a single row (middle row; carrying radial load force) of bearing balls (2 RRB + 1 RBB). Contact zones 13 of the six bearing raceways are illustrated with dotted lines. It should be noted that the ends of the rollers secondarily may also have contact to the bearing rings, thereby additional contact zones 14 (only one indicated in fig. 3) may also be defined.

The combined radial and thrust rows of rolling elements in the 3RRB or 2RRB + 1RBB bearing may be used in applications of very heavy loads such as wind turbines or cranes.

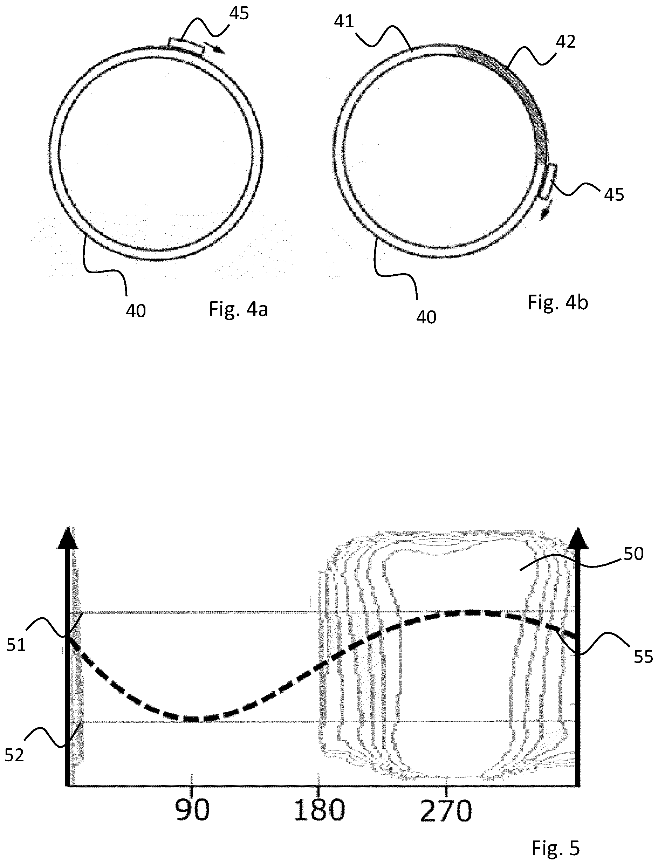

It is well-known and standard procedure to harden those parts of bearing rings that are most exposed to loads/forces, i.e. the contact zones 13, 14 either by case hardening or by induction hardening. The dominating hardening process in the industry is to either have a flame or induction tool that follow the circumference of the bearing rings until the raceway have been hardened, as illustrated schematically in figs. 4a and 4b.

For large bearing rings 40, it is required for the hardening tool 45 to only harden a specific section/fraction of the raceway at a time. Therefore, the blade bearing manufacturer starts at an arbitrary or well-defined location on the bearing ring 40 and then continue round the circumference until the hardening tool 45 is back to the starting position by which a uniform hardening of the full circumference has been carried out. In fig. 4b, the hardening tool 45 is approximately 90° along the circumference, and the difference between the unhardened section 41 and the hardened section 42 is shown.

The hardening tool 45 could be a machine equipped with a motion system which moves around the bearing ring 40, wherein the motion system is equipped with a coil fed by a power source. Speed and heating power may be set to obtain a desired hardening depth. During the procedure, cooling elements may be used as well to cool the surface heated by the coil pairs when the desired hardening depth has been obtained.

This 360° hardening process to achieve a uniform hardening depth along the full circumference is the standard process for large bearings and a uniform hardening depth makes sense for most types of bearings, in particular for bearings within fast rotational machinery such as gearboxes, generators, etc. where there is no load-wise difference between the circumferential positions, as they are exposed to the same forces. Typically, the hardening depth to be applied along the full ring is defined by the most critical load cases. Afterwards, the calculated hardness depth is applied to the full raceway.

However, according to the present invention, it has been realized that for large slewing bearings with defined load distribution, (such as a crane bearing or a wind turbine blade bearing) it makes sense to adapt the machine parameters to adapt the hardening depth over the circumference.

As less hardening depth is needed in specific sections of the ring, the hardening process can be optimized. Therefore, the processing speed can be increased, and the costs may be reduced. Furthermore, risk of failures during the hardening process may be reduced by applying less deep hardness.

Different hardening procedures can be considered to vary the hardening depth over the circumference. I.e. for induction hardening, the depth of hardening can be influenced by several factors, including the frequency and power of the induction field, the speed of the tool, and the temperature of the part during heating.

The speed of the tool and the temperature range used for induction hardening of large rings for bearings can vary depending on the specific application and material being processed.

Some examples could be that heating temperatures may range from 800°C to 1100°C and that the speed of the tool may be 0.1-10 meters per minute (m/min), such as 0.5-5 m/min. This speed refers to the rate at which the part moves through the induction coil during heating.

A standard hardening process described in short:
- The required hardness is achieved by heating the particular area for a specific time.
- Due to the size of blade bearings, a movable heating source is used.
- The industry standard uses a constant temperature and speed of the movable heating source.
- The hardening depth reaches typically several millimeters

Improvements in relation to the present invention:
- By enabling changed temperature/speed during the hardening process, varying hardness is made achievable.
- Cost-savings may be obtained, possibly in the range of 150€ per 1 mm hardening depth of a bearing ring. Consequently, lowering hardening depth on average 1 mm on each blade bearing ring for a wind turbine may be a 900€ saving.

Figs. 5-7 illustrate some examples of variable hardening depth. In all figures, the x-axis indicates the circumferential position on the bearing (θ from 0-360°), whereas the y-axis indicates the hardening depth for each circumferential position.

Focusing now on fig. 5, in a greyish color in the background, indicated with 50, is an indication of where the loads are strongest along the circumference of the bearing. It can be seen that the loads are max in a range around 270°. The line 51 indicates the maximum hardening depth, and which would be the hardening depth given to the full circumference in prior art methods. Line 52 indicates the minimum hardening depth needed regardless of circumferential position.

Different hardening depth profiles 55 would be suitable for a case like this, where a most simple one is shown, where the variable hardening depth is a simple sinusoidal curve 55 (shifted sideways as our θ=0° is randomly positioned). Alternatively, a step-curve could be used with 90° keeping a constant depth along line 51, the opposite 90° keeping a constant depth along line 52 and then connecting the two line segments with curved or linear lines.

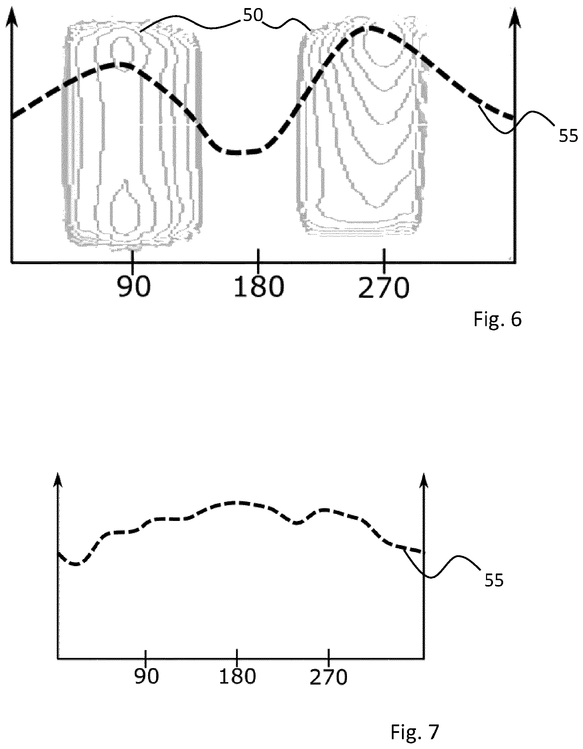

A more complex situation is shown in fig. 6, where the greyish color in the background, similar to fig. 5 and again indicated with 50, indicates two ranges along the circumference where the loads are increased, around 90° and around 260°. In this case, the hardening depth profile 55 is a more complicated curve.

Fig. 7 shows a situation where the hardening variation is fully optimized to the exact load cases/required hardening depth in any circumferential position. This results in a hardening depth profile 55 as shown.

Regardless of the complexity of the desired curves, for programming reasons for the hardening process, it is believed to be advantageous to define curves as resulting function of a number of combined overlapping functions, for instance trigonometric functions. Such functions may allow the steering of the hardening depth by varying temperature or speed or a combination thereof.

The invention has been exemplified above with reference to specific examples of blade bearings in a wind turbine. However, it should be understood that the invention is not limited to the particular examples but may be designed and altered in a multitude of varieties e.g. in relation to other wind turbine bearing as well as other applications involving very large bearings facing axial and radial load forces as well as bending/tilting moments such as large crane, radar or satellite aerial bearings. The invention is defined by appended claims.

## Claims

1. A bearing ring (8, 9) comprising at least one raceway (13)
wherein said at least one raceway (13) has been hardened in a hardening process resulting in a hardening depth profile (55),
wherein said hardening depth profile (55) is defined between a maximum hardening depth (51) and a minimum hardening depth (52),
**characterised in that**
the hardening depth profile (55) has the value of maximum hardening depth (51) in less than 180° of the circumference of the bearing ring, preferably less than 90°.

2. A bearing ring (8, 9) according to claim 1, wherein said hardening process is an induction hardening process.

3. A bearing ring (8, 9) according to claim 1 or 2, wherein said hardening depth profile (55) is defined by a function including at least one trigonometric function.

4. A bearing ring (8, 9) according to any preceding claim, wherein said hardening depth profile (55) is defined by a combination of multiple periodic functions.

5. A bearing ring (8, 9) according to any preceding claim, wherein said hardening depth profile (55) is at least partly designed based on an expected load distribution along the 360° circumference of the bearing ring.

6. A bearing (7) comprising
at least two bearing rings (8, 9) with at least one raceway (13), wherein at least one of the bearing rings (8, 9) comprises a bearing ring according to any preceding claims, and
at least one row of bearing rolling elements (10, 11) positioned between said bearing rings and in contact with each of said at least one raceway (13).

7. A bearing (7) according to claim 6, wherein said bearing rolling elements are bearing balls (11) or rollers (15) or combinations hereof.

8. A wind turbine (1) comprising one or more bearings (7) according to claim 6 or 7.

9. A wind turbine according to claim 8, wherein said one or more bearings (7) are one or more blade bearings.

10. Method of manufacturing a bearing ring (8, 9) according to any of the claims 1-5, said bearing ring (8, 9) comprising at least one raceway (13), said method comprising the step of hardening said at least one raceway (13) in a hardening process including a hardening tool (45) resulting in a hardening depth profile (55), wherein said hardening process includes varying a process parameter of the hardening tool (45) during the hardening process.

11. A method according to claim 10, wherein said process parameter is at least one selected from the group consisting of frequency, power, temperature and speed.

## Patentansprüche

1. Lagerring (8, 9) der mindestens eine Laufbahn (13) umfasst,
wobei die mindestens eine Laufbahn (13) in einem Härteprozess gehärtet worden ist, was zu einem Härtetiefenprofil (55) führte,
wobei das Härtetiefenprofil (55) zwischen einer maximalen Härtetiefe (51) und einer minimalen Härtetiefe (52) definiert ist.
**dadurch gekennzeichnet, dass**
das Härtetiefenprofil (55) den Wert maximaler Härtetiefe (51) in weniger als 180° des Umfangs des Lagerrings, vorzugsweise von weniger als 90°, aufweist.

2. Lagerring (8, 9) nach Anspruch 1, wobei der Härteprozess ein Induktionshärteprozess ist.

3. Lagerring (8, 9) nach Anspruch 1 oder 2, wobei das Härtetiefenprofil (55) durch eine Funktion definiert ist, die mindestens eine trigonometrische Funktion einschließt.

4. Lagerring (8, 9) nach einem vorstehenden Anspruch, wobei das Härtetiefenprofil (55) durch eine Kombination mehrerer periodischer Funktionen definiert ist.

5. Lagerring (8, 9) nach einem vorstehenden Anspruch, wobei das Härtetiefenprofil (55) mindestens teilweise auf Grundlage einer zu erwartenden Lastverteilung entlang des 360°-Umfangs des Lagerrings ausgelegt ist.

6. Lager (7), umfassend
mindestens zwei Lagerringe (8, 9) mit mindestens einer Laufbahn (13), wobei mindestens einer der Lagerringe (8, 9) einen Lagerring nach einem der vorstehenden Ansprüche umfasst, und
mindestens eine Reihe von Lagerwälzkörpern (10, 11), die zwischen den Lagerringen und in Kontakt mit jeder von der mindestens einen Laufbahn (13) angeordnet sind.

7. Lager (7) nach Anspruch 6, wobei die Lagerwälzkörper Lagerkugeln (11) oder Rollen (15) oder Kombinationen hiervon sind.

8. Windkraftanlage (1), die ein oder mehrere Lager (7) nach Anspruch 6 oder 7 umfasst.

9. Windkraftanlage nach Anspruch 8, wobei das eine oder die mehreren Lager (7) ein oder mehrere Blattlager sind.

10. Verfahren zum Herstellen eines Lagerrings (8, 9) nach einem der Ansprüche 1-5, wobei der Lagerring (8, 9) mindestens eine Laufbahn (13) umfasst wobei das Verfahren den Schritt des Härtens der mindestens einen Laufbahn (13) in einem Härteprozess einschließlich eines Härtewerkzeugs (45) umfasst, was zu einem Härtetiefenprofil (55) führt, wobei der Härteprozess das Variieren eines Prozessparameters des Härtewerkzeugs (45) während des Härteprozesses einschließt.

11. Verfahren nach Anspruch 10, wobei der Prozessparameter mindestens einer ist, ausgewählt aus der Gruppe, bestehend aus Frequenz, Leistung, Temperatur und Drehzahl.

## Revendications

1. Bague de palier (8, 9) comprenant au moins un chemin de roulement (13)
dans laquelle ledit au moins un chemin de roulement (13) a été durci dans un processus de durcissement aboutissant à un profil de profondeur de durcissement (55),
dans laquelle ledit profil de profondeur de durcissement (55) est défini entre une profondeur de durcissement maximale (51) et une profondeur de durcissement minimale (52),
**caractérisée en ce que**
le profil de profondeur de durcissement (55) présente la valeur de la profondeur de durcissement maximale (51) sur moins de 180° de la circonférence de la bague de palier, de préférence sur moins de 90°.

2. Bague de palier (8, 9) selon la revendication 1, dans laquelle ledit processus de durcissement est un processus de durcissement par induction.

3. Bague de palier (8, 9) selon la revendication 1 ou 2, dans laquelle ledit profil de profondeur de durcissement (55) est défini par une fonction incluant au moins une fonction trigonométrique.

4. Bague de palier (8, 9) selon une quelconque revendication précédente, dans laquelle ledit profil de profondeur de durcissement (55) est défini par une combinaison de multiples fonctions périodiques.

5. Bague de palier (8, 9) selon une quelconque revendication précédente, dans laquelle ledit profil de profondeur de durcissement (55) est au moins partiellement conçu sur la base d'une répartition de charge attendue le long de la circonférence à 360° de la bague de palier.

6. Palier (7) comprenant
au moins deux bagues de palier (8, 9) avec au moins un chemin de roulement (13), dans lequel au moins une des bagues de palier (8, 9) comprend une bague de palier selon une quelconque revendication précédente, et
au moins une rangée d'éléments roulants de palier (10, 11) positionnés entre lesdites bagues de palier et en contact avec chacune dudit au moins un chemin de roulement (13).

7. Palier (7) selon la revendication 6, dans lequel lesdits éléments roulants de palier sont des billes de palier (11) ou des rouleaux (15) ou des combinaisons de ceux-ci.

8. Éolienne (1) comprenant un ou plusieurs paliers (7) selon la revendication 6 ou 7.

9. Éolienne selon la revendication 8, dans laquelle lesdits un ou plusieurs paliers (7) sont un ou plusieurs paliers de pale.

10. Procédé de fabrication d'une bague de palier (8, 9) selon l'une quelconque des revendications 1-5, ladite bague de palier (8, 9) comprenant au moins un chemin de roulement (13), ledit procédé comprenant l'étape de durcissement dudit chemin de roulement (13) dans un processus de durcissement incluant un outil de durcissement (45) aboutissant à un profil de profondeur de durcissement (55), dans lequel ledit processus de durcissement inclut la variation d'un paramètre de processus de l'outil de durcissement (45) pendant le processus de durcissement.

11. Procédé selon la revendication 10, dans lequel ledit paramètre de processus est au moins un paramètre choisi dans le groupe consistant en fréquence, puissance, température et vitesse.
